# EUROPEAN PATENT SPECIFICATION

(11) **EP 0 567 048 B1**
(45) Date of publication and mention of the grant of the patent: **13.01.1999**
(21) Application number: 93106324.2
(22) Date of filing: 19.04.1993
(51) Int. Cl.: F16H 57/02

(54) **Gearbox motor adaptor**
Zwischenstück für Getriebe und Motor
Adaptateur pour transmission et moteur

(30) Priority: 20.04.1992 JP 128246/92
(43) Date of publication of application: 27.10.1993
(73) Proprietor: SUMITOMO HEAVY INDUSTRIES, LTD., Shinagawa-ku, Tokyo 141 (JP)
(72) Inventor: Takechi, Tetsuo, Handa-shi, Aichi 475 (JP); Minegishi, Kiyoji, Chita-gun, Aichi 470-21 (JP)
(74) Representative: Grünecker, Kinkeldey, Stockmair & Schwanhäusser Anwaltssozietät

(56) References cited:
- FR-A- 2 237 524
- FR-A- 2 245 113
- US-A- 3 234 808
- US-A- 3 813 956
- US-A- 4 811 616

## Description

The present invention is directed to a kit for making a connection structure connecting a motor and an associated gear within a series of geared motors, wherein said series of geared motors includes several kinds of reduction or step-up gears and several kinds of motors.

The closest prior art document FR-2 237 524 discloses a connecting structure constituted by a housing member in which a transmission-shaft member is rotatably supported. Said housing member comprises a gear-side flange portion which is adapted to be mounted to a gear box. Further said housing member is provided with a motor-side flange portion which is adapted to be mounted to a motor.

From FR-2 245 113 there is known a similar connecting structure for connecting a motor to a gear box, wherein said housing member is construed so as to define an interior space receiving therein a disk-brake means. Said disk-brake means is covered by a housing portion which forms a motor-side flange part and which is formed separate from the housing member mounted to the gear box.

From US-A-4 811 916 there is known a system for combining driving modules, e.g., electric motors, with any one of a plurality of driven modules, e.g., speed reducers. Each of the driving modules has an output shaft and each of the driven modules have a input shaft. One of these shafts of the combined driving module and driven module combination has a tapered outer surface, and the other of these shafts has a tapered socket therein, with the tapered outer shaft being coaxially received within the tapered socket, and with the taper of the outer surface and the taper of the socket being substantially the same.

Reduction gears are intended to reduce the rotation of motors and give the reduced rotation to the input sides of the mating-machines. They are of various types which include an internally meshing planetary reduction gear, simple planetary reduction gear, parallel axes type reduction gear, hypoid reduction gear, worm reduction gear and the like.

In such a reduction gear, for simplifying and facilitating the connection between the output shaft of the motor and the input shaft of the reduction gear, the structure of the input shaft is often of a hollowed type. Here, the hollowed input shaft means such a structure that the hollowed portion, in which the output shaft of the motor is fitted, is formed at the end portion of the input shaft.

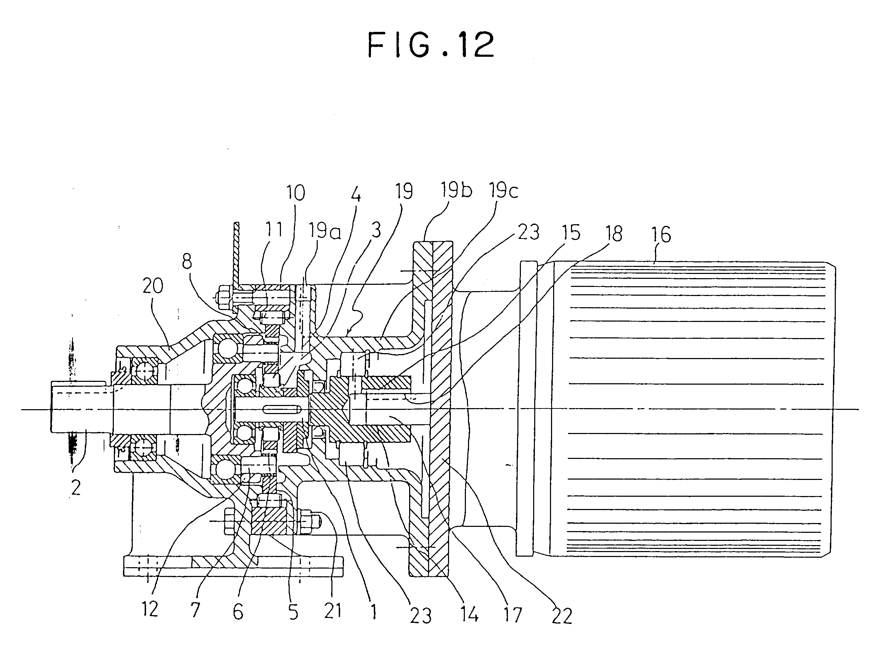

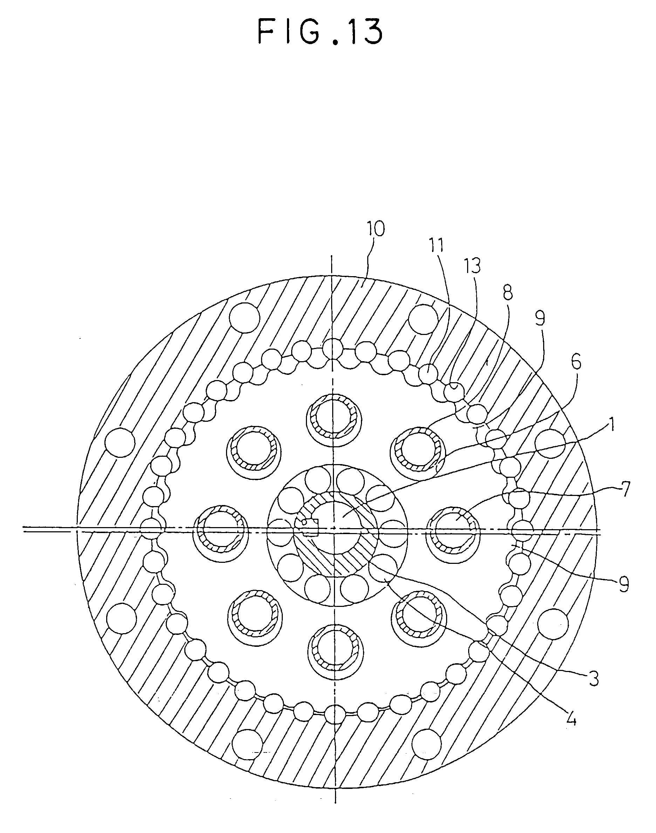

A well-known example of the reduction gear of a hollowed input shaft type will be explained using Figs. 12 and 13.

In addition, this example shows an internally meshing planetary reduction gear wherein the output rotation of a motor inputted from an input shaft 1 is reduced, and is given to an output shaft 2. However, the connection structure between the output shaft of the motor and the input shaft of the reduction gear is also applied to the other types of reduction gears.

In the above example, the reduction mechanism is as follows.

An eccentric body 3 is provided on the input shaft 1, and is contacted with an external gear 5 through rollers 4. A plurality of internal roller holes 6 are provided on the external gear 5. Internal pins 7 and the internal rollers 8 are inserted in the internal roller holes 6, respectively. In addition, the internal rollers may be omitted. External teeth 9 having trochoidal shaped teeth or circular-arc shaped teeth are provided around the outer periphery of the external gear 5. External pins 11 (equivalent to the internal teeth) provided around an internal gear 10 internally mesh with the external teeth 9. Each of the external pins 11 is freely inserted in an external hole 13 and is held to be easily rotated.

The internal pins 7 are fixed on or fitted in a flange portion 12 of the output shaft 2.

In this well-known example, one rotation of the input shaft 1 becomes one rotation of the eccentric body 3. However, since the external gear 5 is restricted in its rotation by the internal rollers 6 and the internal pins 7, it is swayed. Accordingly, assuming that the difference between the teeth number of the external gear 5 and the number (teeth number) of the external pins 11 is taken as 1, by one rotation of the input shaft 1, the external teeth 9 of the external gear 5 are displaced in meshing from the external pins 11 serving as the internal teeth of the internal gear 10 by one tooth.

As a result, one rotation of the input shaft 1 is reduced to be 1/(teeth number of the external gear 5), and the reduced rotation is transmitted to the output shaft 2 through the internal pins 7.

In the internally meshing planetary reduction gear having the above structure, the connection structure between the hollowed input shaft and the motor will be explained.

The input shaft 1 is of a hollow type, that is, a fitting hollow 14 is formed at the end portion of the input shaft 1. A key groove 15 is formed in the fitting hollow 14. An output shaft 17 of a motor 16 is fitted in the fitting hollow 14 of the input shaft 1, and is fixed by by-means of a key 18.

The motor 16 is connected to the internally meshing planetary reduction gear by means of a connection structure 19. Here, the connection structure 19 has the following construction.

The connection structure 19 includes a gear-sided flange part 19a on the internally meshing planetary reduction gear side, a motor-sided flange part 19b on the motor 16 side, and a cylinder part 19c integrally connecting both flange parts to each other. The gear-side flange part 19a is jointed on a casing 20 of the internally meshing planetary reduction gear by a bolt 21 while putting the internal gear 10 therebetween. In addition, since the internal gear 10 also serves so the casing, there may be adopted a structure of bolt-jointing the gear-sided flange part 19a to the internal gear 10. The motor-sided flange part 19b is fixed on a motor flange part 22 provided on the end portion of the motor 16 by a bolt (not shown). The input shaft 1 is disposed inside a cylinder part 19c while passing through the gear-sided flange part 19a, and is supported by the cylinder part 19c through a bearing 23.

The connecting operation between the internally meshing planetary reduction gear and the motor 16 is as follows: First, the connection structure 19 is fixed on the internally meshing planetary reduction gear side. Next, the output shaft 17 of the motor 16 is fitted in the hollowed input shaft 1 and concurrently the motor flange part 22 is fixed on the motor-sided flange part 19b of the connection structure 19.

The removing operation may be made in the procedure reversed to the above connecting operation.

As described above, the hollowed input shaft 1 makes it possible to simplify the connecting operation between the output shaft 17 of the motor 16 and the same, and to facilitate the mating between the internally meshing planetary reduction gear and the motor. Therefore, it is very useful and widely used at present.

Incidentally, the internally meshing planetary reduction gear can change the reduction ratio only by changing the external gear 5, internal gear 10, external pins 11 and eccentric body 3. Thus, the mating dimensions (sizes) to the mating-machines (to which the reduced rotation is given) determined by the output shafts 2 and the casings 20 are divided in several kinds. Further, the output shafts 2 and the casings 20 according to respective divisions are prepared, to meet various requirements of users. The kind of the output shaft 1 and the casing 20 constituted as a series is referred to as a "frame number".

Also, the reduction gears have various types, for example, an internal meshing planetary reduction gear, simple planetary reduction gear, parallel axes type reduction gear, hypoid reduction gear, worm reduction gear and the like. They have also various types depending output shaft orientations (for example, coaxial type, parallel type, orthogonal type and the like). On the other hand, the motors have various types depending on the output and the rotational speed.

The above connection structure between the reduction gear and the motor 16 has become insufficient to cope with the recent rationalization of the production system and the diversification of users. It presents the following problems.

For example, in the field of the physical distribution system constituted of a lot of conveyors, it is effective to operate the particular conveyors only at the time required for the physical distribution system. Therefore, each conveyor provided with the reduction gear is intended to be independently driven.

Now, the reduction gear used for the conveyor or the like only constitutes a part of the mating-machine (conveyor or the like), and further, the mating-machine only constitutes a part of the whole physical distribution system. Accordingly, in viewpoint of the whole physical distribution system, various mounting methods and reduction ratios are required in order to compactly install the reduction gear. Namely, various types in the output shaft orientations (for example, a coaxial type, simply parallel axis type, and orthogonal type) are also required in one physical distribution system in addition to the various reduction ratios.

On the other hand, along with the advance of the electronic technology since 1980 ages, there have been spread inverter motors capable of changing the rotational speed and the servo-motors capable of enhancing the positional control. They have been widely used for the physical distribution system. However, for making in common the maintenance of the whole system, controllers for the motors, and the software thereof, it is convenient to reduce the kinds of motors and reduction gears in one system. Namely, it has been demanded to diversify the usages of motors and the reduction gears including the connection parts thereof, with lower kinds thereof.

In other words, to meet the commercial requirements accompanied with the rationalization of the production system, in terms of the mating to the motor, the well-known reduction gear must satisfy the following requirements:

A reduction gear having one frame number can be removably mounted to two or more kinds (mainly, outputs) of motors having several flange dimensions.

A motor having one flange dimension can be removably combined with the reduction gears having the same structure within two or more frame numbers.

A motor having one flange dimension can be removably combined with the reduction gears having two or more kinds of reduction ratios and structural differences (output shaft orientations and types).

Further, by assembling the structures satisfying the above requirements. A motor having one flange dimension can selects one from the reduction gears having two or more of output shaft orientations (a coaxial type, parallel type, orthogonal type and the like), two or more of different structures (an internally meshing planetary reduction gear, parallel axes type reduction gear, hypoid reduction gear, worm reduction gear and the like), and two or more of frame numbers.

However, in the reduction gears having the conventional structure, the reduction gear having one frame number corresponds to only one motor. Accordingly, they cannot satisfy the above requirements, and therefore, cannot constitute a product group capable of satisfying the above requirements.

It is therefore an object of the present invention to provide a connection structure between a reduction or step-up gear and a motor, which is capable of mating various kinds of motors to various kinds of reduction or step-up gears in a more economic manner.

According to the present invention this objective has been performed by a kit for making a connection structure as defined in claim 1.

According to the present invention, there is provided a connection structure between a reduction or step-up gear having a hollowed input shaft and a motor having an output shaft fitted in the hollowed input shaft. In the above, a gear-side flange part fixed on the reduction or step-up gear has a disk part, a cylinder part integrally formed with the disk part, and a spigot-joint part formed on the end portion of the cylinder part. Further, the gear-side flange part is spigot-jointed to the motor mounting plate, to form an input shaft box, and the hollowed input shaft of the reduction or step-up gear is fitted to the motor mounting plate inside the input shaft box.

On the basis of the present invention, there is provided a method of mating various kinds of reduction or step-up gears of a hollowed input shaft type to various kinds of motors comprising the steps of: forming an input shaft box by spigot-jointing a gear-side flange part fixed on a reduction or step-up gear to a motor mounting plate fixed on a motor, said gear-side flange part having a disk part, a cylinder part integrally formed with the disk part, and a spigot-joint part formed on the end portion of the cylinder part, and said motor mounting plate having a spigot-joint part which is spigot-jointed to the spigot-joint part of the gear-side flange part; and fitting the hollowed input shaft of the reduction or step-up gear to the motor output shaft inside the input shaft box. In the above, one kind of the gear-side flange part can be mounted on plural kinds of the reduction or step-up gears, one kind of the motor mounting plate can be mounted on plural kinds of motors, whereby plural kinds of the reduction or step-up gears can be assembled and connected with plural kinds of the motors.

The above and other features and advantages of the present invention will become more apparent from the following description of the invention taken in conjunction with the accompanying drawings, wherein like reference characters designate the same or similar parts, and wherein:
Fig. 1 is a sectional view showing a connection structure between a reduction gear and a motor according to a first embodiment of the present invention;
Fig. 2 is a sectional view showing a second embodiment, wherein the motor mounting plate of Fig. 1 is modified;
Fig. 3 is a sectional view showing a third embodiment, wherein the gear-side flange part of Fig. 1 is modified;
Fig. 4 is a sectional view showing a fourth embodiment, wherein the motor mounting plate of Fig. 3 is modified to the motor mounting plate of Fig. 2;
Fig. 5 is a sectional view showing a fifth embodiment, wherein the reduction gear is modified into a hypoid reduction gear;
Fig. 6 is a sectional view showing a sixth embodiment wherein the motor mounting plate of Fig. 5 is modified;
Fig. 7 is a sectional view showing a seventh embodiment, wherein the gear-side flange part of Fig. 5 is modified;
Fig. 8 is a sectional view showing an eighth embodiment, wherein the reduction gear is modified in another hypoid reduction gear;
Fig. 9 is a sectional view showing a ninth embodiment, wherein the motor mounting plate of Fig. 8 is modified;
Fig. 10 is a sectional view showing an tenth embodiment, wherein the motor mounting plate of Fig. 8 is modified;
Fig. 11 is a sectional view showing an eleventh embodiment, wherein the reduction gear is modified in a another hypoid reduction gear;
Fig. 12 is a sectional view showing a prior art connection structure between a reduction gear and a motor; and
Fig. 13 is a sectional view showing a part of the internally meshing planetary reduction gear of Fig. 12.

Hereinafter, the preferred embodiments of the present invention will be explained with reference to the accompanying drawings.

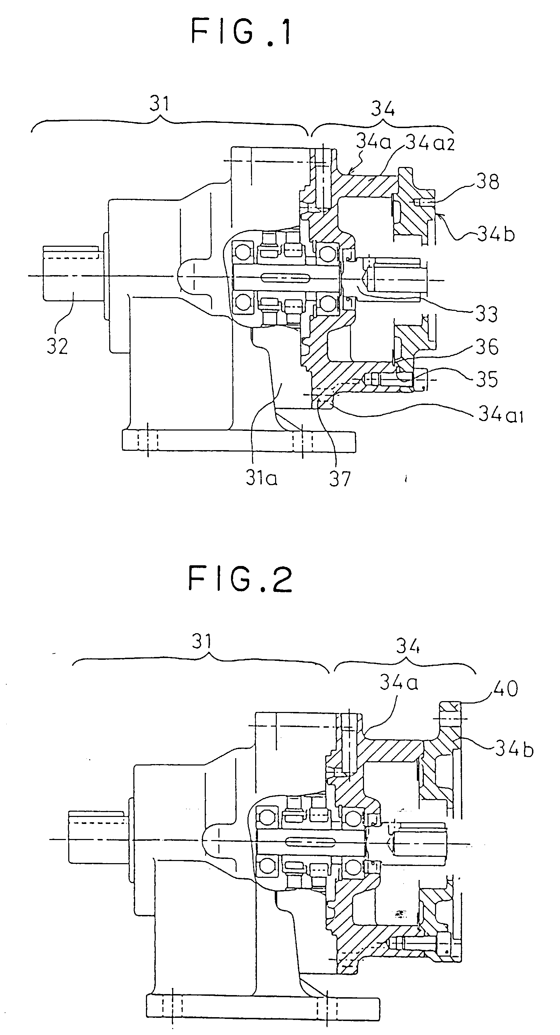

Fig. 1 is a sectional view showing the structure according to a first embodiment of the present invention.

In Fig. 1, an internally meshing planetary reduction gear 31 has an output shaft 32 and an input shaft 33. The input shaft 33 is of the well-known hollowed type as shown in Fig. 12.

According to the present invention, the well-known connection structure 19 is replaced by the split-type input shaft box having the following structure. Namely, the input shaft box 34 is divided into a gear-side flange part 34a and a motor mounting plate 34b. The gear-side flange part 34a is constituted of a disk part 34a1 and a cylinder part 34a2 integrally formed with the disk part 34a1. The disk part 34a1 is fixed on a casing 31a of an internally meshing planetary reduction gear 31 (in this embodiment, the internal gear serves as the casing). The motor mounting plate 34b is fixed on a motor flange part, not shown, (see the motor flange part 12 in Fig. 12).

An spigot-joint part 35 is formed on the end portion of the cylinder part 34a1 of the above gear-side flange part 34a. This spigot-joint part 35 is spigot-jointed with the spigot-joint part 36 provided on the motor mounting plate 34b.

Here, the fixing structure (in this embodiment, using the bolt-joint) between the gear-side flange part 34a and the internally meshing planetary reduction gear 31 is intended to be the same in the diameter, the mounting position, the pitch and the like of the bolt, which makes it possible to be mounted to various kinds of reduction gears. Similarly, the fixing structure (in this embodiment, using also the bolt-joint) between the motor mounting plate 34b and the motor is intended to be the same in the diameter, the mounting position, the pitch and the like of the bolt, which makes it possible to be mounted to various kinds of motors.

The function of the present invention so constructed as described above will be explained below.

The reduction gears 31 have various frame numbers and various kinds (types or the output shaft orientations) respectively. However, the gear-side flange part 34a can mount on the reduction gears 31 of various frame numbers and various kinds, and accordingly, it can mount the reduction gear of an arbitrary frame number or kind. On the other hand, the motor mounting plate 34b can mount various kinds of motors, and accordingly, can select an arbitrary one from various kind of motors.

Thus, the input shaft box 34 of one kind can mount various kinds of reduction gears and motors. This makes it possible to simply and rapidly cope with the diversified requirements of users, and to reduce the stock.

Since the reduction gears and the motors have various kinds, the one kind of input shaft box described above is occasionally insufficient. At this time, it is required to constitute a product group capable of coping with various kinds of the reduction gears and motors while reducing the number of kinds of the input shaft boxes (gear-side flange parts and motor mounting plates) to the utmost. In the above, the following structures are required.

Fig. 2 is a second embodiment of modifying the structure of Fig. 1. When the kind (output or the like) of the motor is excessively different, that is, the size of the motor is excessively larger, the motor mounting plate 34b of Fig. 1 cannot mount it. In this case, without changing the whole input shaft box 34, the gear-side flange part 34a fixed on the reduction gear 31 is made to be the same as shown in Fig. 1 (hereinafter, referred to as the "A-type gear-side flange part"), and only the motor mounting plate 34b as shown in Fig. 1 (hereinafter, referred to as the "A-type motor mounting plate") is modified to, for example, the motor mounting plate 34b having a projecting part 40 (hereinafter, referred to as "B-type motor mounting plate").

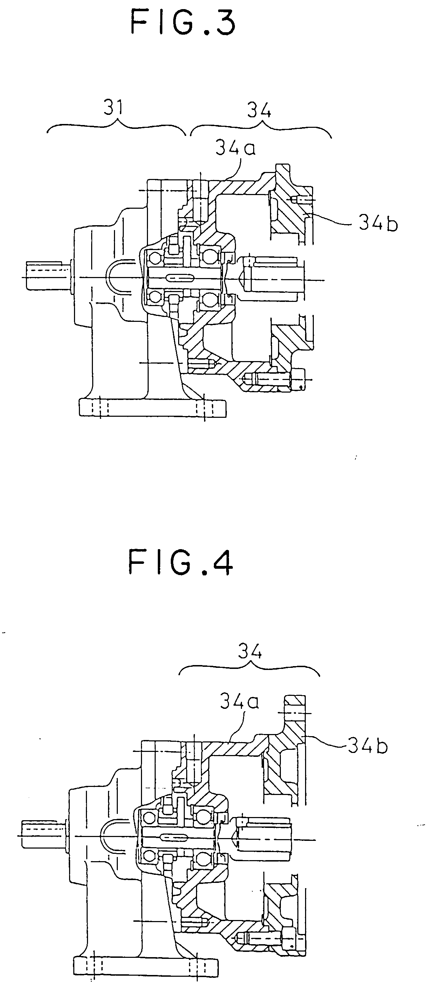

Fig. 3 is a third embodiment of modifying the structure of Fig. 1. When the frame number of the reduction gear 31 is excessively small, the gear-side flange part 34b of Fig. 1 cannot mount it. In this case, without changing the whole input shaft box 34, the motor mounting plate 34b is made to be the same as shown in Fig. 1, that is, the A-type motor mounting plate, and only the A-type gear-side flange part 34a as shown in Fig. 1 is modified to, for example, the small sized gear-side flange part 34a (hereinafter, referred to as the "B-type gear-side flange part").

Fig. 4 is a fourth embodiment, wherein the input shaft 34 is constituted of the B-type gear-side flange part 34a and the B-type motor mounting plate 34b.

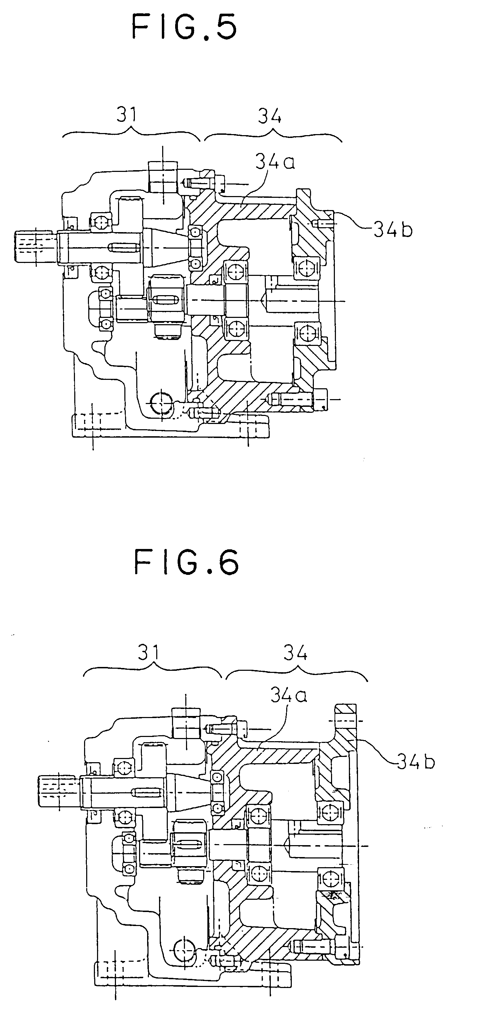

Fig. 5 is a fifth embodiment, wherein a parallel axes type reduction gear is used as the reduction gear 31. In this case, the input shaft box 34 is constituted of the gear-side flange part 34a different from the above cases (hereinafter, referred to as the "C-type gear-side flange part"), and the A-type motor mounting plate 34b.

Fig. 6 is a sixth embodiment, wherein a parallel axes type reduction gear is used as the reduction gear 31 just as in Fig. 5. In this case, the input shaft box 34 is constituted of the gear-side flange part 34a different from the above cases (hereinafter, referred to as the "C-type gear-side flange part"), and the B-type motor mounting plate 34b.

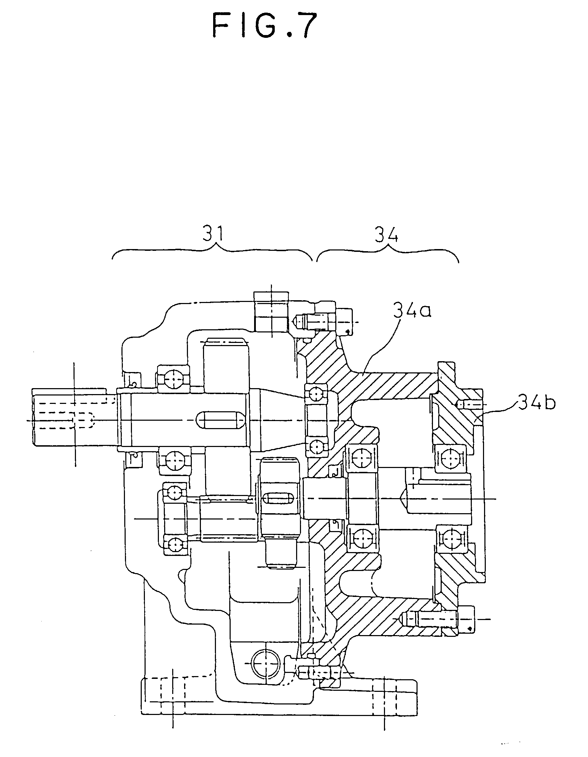

Fig. 7 is a seventh embodiment, wherein a parallel axes type reduction gear is used as the reduction gear 31 just as in Fig. 5. In this case, the input shaft box 34 is constituted of the gear-side flange part 34a different from the above cases (hereinafter, referred to as the "D-type gear-side flange part"), and the A-type motor mounting plate 34b.

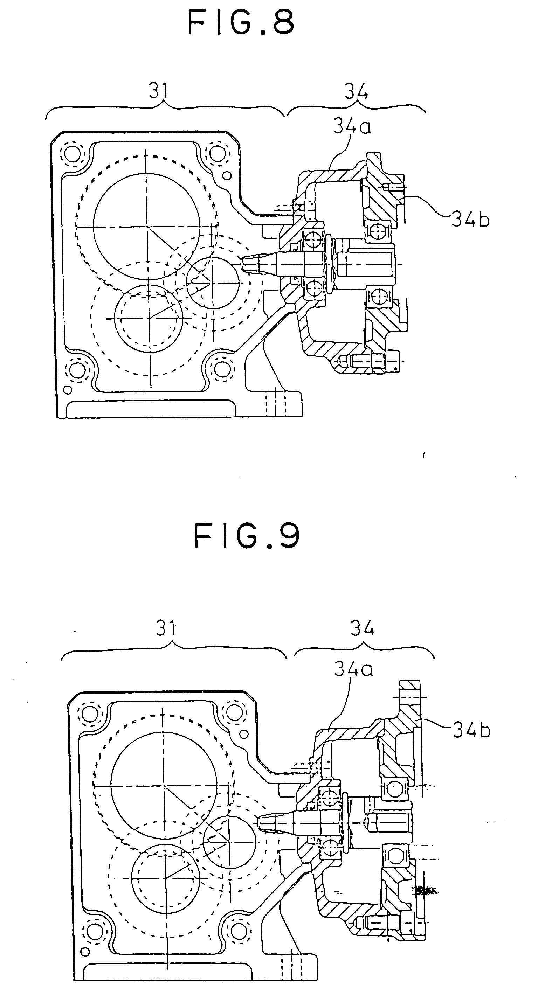

Fig. 8 is a eighth embodiment, wherein a hypoid reduction gear is used as the reduction gear 31. In this case, the input shaft box 34 is constituted of the gear-side flange part 34a different from the above cases (hereinafter, referred to as the "E-type gear-side flange part"), and the A-type motor mounting plate 34b.

Fig. 9 is a ninth embodiment, wherein a hypoid reduction gear is used as the reduction gear 31. In this case, the input shaft box 34 is constituted of the E-type gear-side flange part 34a, and the B-type motor mounting plate 34b.

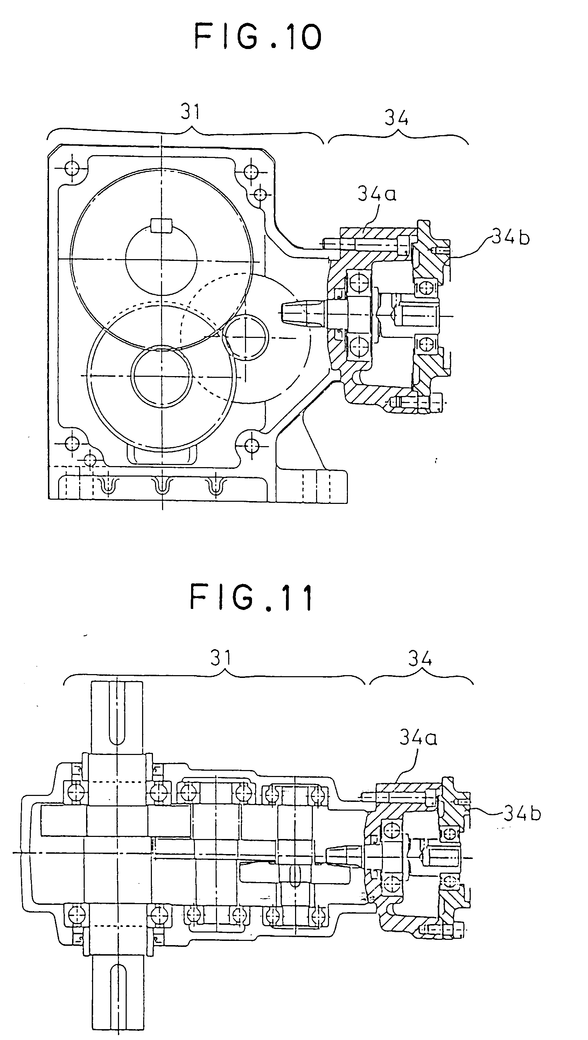

Fig. 10 is a tenth embodiment, wherein a hypoid reduction gear is used as the reduction gear 31. In this case, the input shaft box 34 is constituted of the gear-side flange part 34a different from the above cases (hereinafter, referred to as the "F-type gear-side flange part"), and the A-type motor mounting plate 34b.

Fig. 11 is an eleventh embodiment, wherein another type of a hypoid reduction gear 31 is used. In this case, the input shaft box 34 is constituted of the F-type gear-side flange part 34a, and the A-type motor mounting plate 34b just as in Fig. 10.

As explained above, a product group is constituted of 6 types of A, B, C, D, E and F as the gear-side flange parts, and two types of A and B as the motor mounting plates. It can be mated to various kinds of reduction gears and motors.

In addition, the above embodiments have described using the reduction gear. However, it functions as the step-up gear by replacing the input side by the output side. The present invention, therefore, can be applied to the step-up gear.

Also, the motor of the present invention includes a hydraulic motor, in addition to the electric motor.

The present invention so constructed as described above has the following effects:

First, a reduction gear having one frame number can be removably mounted on two kinds (mainly, outputs) or more of motors having several flange dimensions. Also, a motor having one flange dimension can be removably mounted on reduction gears having the same structure of two or more frame numbers. Accordingly, as compared with the conventional connection structure wherein one motor can be mounted on the reduction gears having only one frame number, it is possible to promote the standardization of the products to users, to early supply the products, and to reduce the stock.

Also, a motor having one flange dimension can be removably mounted on reduction gears having two or more kinds of reduction ratios and structural differences (output shaft orientations and types). In terms of this point, it is possible to achieve the standardization of the products, early supply, and reduction in the stock.

Further, for a motor having one flange dimension, by assembling the structures satisfying the above, it is possible to select one from reduction gears having two or more of output taking directions (a coaxial type, parallel type, orthogonal type and the like), two or more of different structures (an internally meshing planetary reduction gear, parallel axes type reduction gear, hypoid reduction gear, worm reduction gear and the like), and having two or more of frame numbers. Similarly, this makes it possible to achieve the standardization of the products, early supply, and reduction in the stock.

Also, by preparing a few number of the gear-side flange parts and the motor mounting plates, it is possible to obtain the required assemblies between the reduction gears and the motors, and hence to satisfy the various requirement of users as a product group.

## Claims

1. Kit for making a connection structure connecting a motor (16) and an associated gear of a series of geared motors, said series of geared motors including
- several kinds of reduction or step-up gears, each having a hollowed input shaft (33); and
- several kinds of motors (16) each having an output shaft (17) fitted in the hollowed input shaft (33) when connected to an associated gear,
said kit comprising:
- a series of gear-side flange parts (34a) of different type (A,B,C,D,E,F) each being provided to be mounted to one of the several kinds of reduction or step-up gears, each of said gear-side flange part types having a disk part (34a1), a cylinder part (34a2) integrally formed with said disk part (34a1), and a spigot-joint part formed on the end portion of said cylinder part (35); and
- a series of two or more motor mounting plates (34b) of different types (A,B) to be mounted to a respective one of the several kinds of motors, each of said motor mounting plate types having a spigot-joint part (36) to be connected to the spigot-joint part (35) of one of the above mentioned types of said gear-side flange parts (34a);
wherein, in use one of the types (A,B,C,D,E,F) of gear-side flange parts (34a) is mounted on one of the kinds of the reduction or step-up gears and spigot-jointed to one of the types (A,B) of motor mounting plates (34b) to form an input shaft box (34) and said hollowed input shaft (33) of said reduction or step-up gear is inside said input shaft box (34).

2. Kit for making a connection structure according to claim 1, wherein one of said reduction gears is a parallel axes type reduction gear.

3. Kit for making a connection structure according to claim 1, wherein one of said reduction gears is a hypoid gear.

4. Kit for making a connection structure according to claim 1, wherein one of said reduction gears is an internally meshing planetary reduction gear.

5. Kit for making a connection structure according to claim 1, wherein one of said reduction gears is a worm reduction gear.

6. Kit for making a connection structure according to at least one of claims 1 to 5, wherein one of said motors is an electric motor.

7. Kit for making a connection structure according to at least one of claims 1 to 5, wherein one of said motors is a hydraulic motor.

## Patentansprüche

1. Bausatz zur Schaffung einer Verbindungsstruktur zum Verbinden eines Motors (16) und eines zugehörigen Getriebes bei einer Getriebemotoren-Serie, wobei die Getriebemotoren-Serie
- verschiedene Arten von Übersetzungs- oder Untersetzungsgetrieben, die jeweils eine hohle Eingangswelle (33) aufweisen; und verschiedene Arten von Motoren (16), die jeweils eine Ausgangswelle (17) aufweisen, die bei Verbindung mit einem zugehörigen Getriebe in die hohle Eingangswelle (33) eingesetzt ist, umfaßt, wobei der Bausatz aufweist:
- eine Serie getriebeseitiger Flanschteile (34a) unterschiedlicher Bauform (A,B,C,D,E,F), welche jeweils dazu vorgesehen sind, an einem der verschiedenen Arten von Unter- oder Übersetzungsgetrieben angebracht zu werden, wobei jede Bauform der getriebeseitigen Flanschteile einen Scheibenabschnitt (34a1), ein Zylinder-Teil (34a2), das integral mit dem Scheibenabschnitt (34a1) ausgebildet ist, und einen Zentrierverbindungsabschnitt aufweist, der an einem Endabschnitt des Zylinder-Teiles (35) ausgebildet ist; und
- eine Serie mit zwei oder mehreren Motorbefestigungsplatten (34b) unterschiedlicher Bauformen (A,B), die dazu vorgesehen sind, mit den entsprechenden der verschiedenen Arten von Motoren verbunden zu werden, wobei jede Bauform der Motorbefestigungsplatten einen Zentrierverbindungsabschnitt (36) aufweist, der mit dem Zentrierverbindungsabschnitt einer der oben genannten Bauformen der getriebeseitigen Flanschabschnitte (34a) verbindbar ist;
- wobei beim Einsatz eine der Bauformen (A,B,C,D,E,F) der getriebeseitigen Flanschteile (34a) an einer Bauform der Über- oder Untersetzungsgetriebe angebracht und mit einer der Bauformen (A,B) der Motorbefestigungsplatten (34b) zentrierverbunden ist, zur Bildung eines Eingangswellengehäuses (34), wobei die hohle Eingangswelle (33) des Über- oder Untersetzungsgetriebes innerhalb des Eingangswellengehäuses (34) aufgenommen ist.

2. Bausatz zur Schaffung einer Verbindungsstruktur nach Anspruch 1, wobei eines der Untersetzungsgetriebe ein Parallel-Achsen-Untersetzungsgetriebe ist.

3. Bausatz zur Schaffung einer Verbindungsstruktur nach Anspruch 1, wobei eines der Untersetzungsgetriebe ein Hypoidgetriebe ist.

4. Bausatz zur Schaffung einer Verbindungsstruktur nach Anspruch 1, wobei eines der Untersetzungsgetriebe ein Zykloid-Untersetzungsgetriebe ist.

5. Bausatz zur Schaffung einer Verbindungsstruktur nach Anspruch 1, wobei eines der Untersetzungsgetriebe ein Schneckenrad-Untersetzungsgetriebe ist.

6. Bausatz zur Schaffung einer Verbindungsstruktur nach wenigstens einem der Ansprüche 1 bis 5, wobei einer der Motoren ein Elektromotor ist.

7. Bausatz zur Schaffung einer Verbindungsstruktur nach wenigstens einem der Ansprüche 1 bis 5, wobei einer der Motoren ein Hydraulikmotor ist.

## Revendications

1. Nécessaire pour constituer une structure de connexion, assurant la connexion d'un moteur (16) et d'une transmission associée, dans une série de motoréducteurs, ladite série de motoréducteurs comprenant :
- plusieurs types d'engrenages réducteurs ou multiplicateurs, ayant chacun un arbre d'entrée (33) creux; et
- plusieurs types de moteurs (16) ayant chacun un arbre de sortie (17) monté dans l'arbre d'entrée (33) creux, lorsqu'on établit la liaison avec une roue dentée associée,
ledit nécessaire comprenant :
- une série de pièces formant bride latérale de transmission à roues dentées (34a), de type différent (A,B,C,D,E,F), chacun étant prévu pour être monté sur l'un divers types d'engrenages réducteurs ou multiplicateurs, chacun desdits types de pièces formant bride latérale de transmission à roues dentées ayant une partie discoïde (34a1), une partie cylindrique (34a2) formée d'une seule pièce avec ladite partie discoïde (34a1), et une partie à joint à emboîtement ou manchon, formée sur la partie d'extrémité de ladite partie cylindrique (35); et
- une série de deux plaques de montage de moteur (34b) ou plus, de type (A,B) différents, devant être montées sur un moteur respectif parmi l'un des différents types de moteurs, chacun desdits types de plaque de montage de moteur ayant une partie à joint à emboîtement-manchon (36) devant être reliée à la partie à joint à emboîtement-manchon (35), d'un des types mentionnés ci-dessus, des pièces formant bride latérale de transmission à roues dentées (34a);
dans lequel, en utilisation, l'un des types (A,B,C,D,E,F) des pièces formant bride latérale de transmission à roues dentées (34a) est monté sur l'un des types des transmissions à engrenages réducteurs ou multiplicateurs et raccordé, par manchon-emboîtement, à l'un des types (A, B) des plaques de montage de moteur (34b) pour former un caisson à arbre d'entrée (34) et ledit arbre d'entrée creux (33) dudit engrenage réducteur ou multiplicateur étant placé à l'intérieur dudit caisson à arbre d'entrée (34).

2. Nécessaire pour établir une structure de connexion selon la revendication 1, dans lequel l'une desdites transmission à engrenages réducteurs est une transmission à engrenages réducteurs de type à axe parallèle.

3. Nécessaire pour établir une structure de connexion selon la revendication 1, dans lequel l'une transmission à engrenages réducteurs est une transmission à engrenages hypoïdes.

4. Nécessaire pour établir une structure de connexion selon la revendication 1, dans lequel l'une desdites transmission à engrenages réducteurs est une transmission à engrenages planétaires à engrènement interne.

5. Nécessaire pour établir une structure de connexion selon la revendication 1, dans lequel l'une desdites transmission à engrenages réducteurs est une transmission à engrenages réducteurs à vis.

6. Nécessaire pour établir une structure de connexion selon au moins l'une des revendications 1 à 5, dans lequel l'un desdits moteurs est un moteur électrique.

7. Nécessaire pour établir une structure de connexion selon au moins l'une des revendications 1 à 5, dans lequel l'un desdits moteurs est un moteur hydraulique.
